# EUROPÄISCHE PATENTSCHRIFT

(11) **EP 3 455 030 B1**
(45) Veröffentlichungstag und Bekanntmachung des Hinweises auf die Patenterteilung: **05.05.2021**
(21) Anmeldenummer: 17734628.5
(22) Anmeldetag: 12.05.2017
(51) Int. Cl.: B24B 7/12, B30B 5/04, B29C 39/00

(54) **VERFAHREN ZUR BEARBEITUNG EINES ENDLOSBANDES**
METHOD FOR PROCESSING AN ENDLESS BELT
PROCÉDÉ DE FAÇONNAGE D'UNE BANDE SANS FIN

(30) Priorität: 13.05.2016 AT 504442016
(43) Veröffentlichungstag der Anmeldung: 20.03.2019
(73) Patentinhaber: Berndorf Band GmbH, 2560 Berndorf (AT)
(72) Erfinder: HOLZINGER, Andreas, 3130 Herzogenburg (AT); KRENN, Martin, 2351 Wr. Neudorf (AT)
(74) Vertreter: Burger, Hannes
(86) Internationale Anmeldenummer: PCT/AT2017/060126
(87) Internationale Veröffentlichungsnummer: WO 2017/193152

(56) Entgegenhaltungen:
- WO-A1-2015/027263
- AT-B- 413 679
- DE-A1-102015 218 688
- US-A- 2 191 256

## Beschreibung

Die Erfindung betrifft ein Verfahren zur Bearbeitung eines Endlosbandes gemäß dem Oberbegriff von Anspruch 1.

Ein Endlosband der eingangs genannten Art ist beispielsweise aus der US3728066 A2 bekannt geworden. Bei bekannten Endlosbändern werden die freien Enden des Bandkörpers miteinander verschweißt, um einen geschlossenen Ring zu erhalten. Die dabei entstehende auch als Querschweißnaht bezeichnete Schweißnaht wird durch Abschleifen einer Schweißraupe und Abtragen von Verunreinigungen nachbearbeitet. Hierdurch entsteht im Bereich der Querschweißnaht eine Stelle geringerer Dicke. Diese Stelle kann bei unterschiedlichen Produkten, welche auf oder mit dem Endlosband hergestellt werden, als Abdruck oder Kante sichtbar werden, was eine Minderung der Produktqualität zur Folge haben kann. Vor allem bei der Herstellung von Filmen, insbesondere Triacetatfilmen, welche beispielsweise für die Produktion von LCD-Bildschirmen verwendet werden, können die Stellen geringerer Dicke in dem fertigen Produkt als Abdrücke sichtbar sein. Derartige Abdrücke sind jedoch unerwünscht und mindern die Qualität des Filmes. Auch bei der Herstellung von Produkten, beispielsweise Platten, mittels Doppelbandpressen, bei welchen Endlosbänder zum Einsatz kommen, können Stellen geringerer Dicke als unerwünschte Abdrücke auf die Produkte übertragen werden. An dieser Stelle sei jedoch darauf hingewiesen, dass Stellen geringerer Dicke nicht nur durch bearbeitete Schweißnähte entstehen können, sondern auch andere Ursachen haben können. So können derartige Stellen durch Reparaturstellen, beispielsweise durch Einsetzen von Reparaturflicken, wie Ronden, etc. verursacht oder auch ganz allgemein durch Fehlstellen in dem Endlosband gebildet sein. Weitere Verfahren zur Herstellung von Endlosbändern sind aus der AT 413 679 B, der WO2015/027263 A1 sowie der DE 10 2015 218688 A1 bekannt geworden, während die US 2 191 256 A eine Schleifvorrichtung betrifft.

Es ist daher eine Aufgabe der Erfindung die oben genannten Nachteile des Stands der Technik zu überwinden und zu verhindern, dass Dickenabweichungen des Endlosbandes nicht in einem mit dem Endlosband hergestellten Produkt sichtbar sind.

Diese Aufgabe wird mit einem Verfahren der eingangs genannten Art erfindungsgemäß durch die Merkmale des kennzeichnenden Teils von Anspruch 1 gelöst.

Die Steigung der Dickenabweichung ist ein Maß dafür, wie stark sich die Dicke des Endlosbandes in eine Richtung betrachtet verändert, oder anders gesagt, wie steil ein Übergangsbereich von einer Stelle geringerer Dicke zu einer anderen Stelle des Endlosbandes ist. Mit der erfindungsgemäßen Lösung wird ein sehr flacher Anstieg der Dickenabweichung und somit ein sehr flacher Übergang, von der Stelle geringerer Dicke zu einer anderen Stelle des Endlosbandes erzielt. Die erfindungsgemäße Lösung zeichnet sich zudem dadurch aus, dass Übergänge von Stellen geringerer Dicke zu benachbarten Bereichen keine Abstufungen aufweisen, die als Abdrücke in einem Produkt sichtbar sind.

Durch die Erfindung ist es möglich, mit geringem Aufwand ein Endlosband mit einer sehr geringen Dickenabweichung als auch mit einer sehr geringen Planheitsabweichung herzustellen. Durch die geringe Planheitsabweichung wird die Qualität des hergestellten Produktes weiter wesentlich verbessert, da Welligkeiten des Endlosbandes, welche in dem Produkt ebenfalls sichtbar sein können, beseitigt werden.

Gemäß einer vorteilhaften Weiterbildung der Erfindung kann es vorgesehen sein, dass der Schleifkopf mehrere Schleifsteine aufweist, die mit einem vorgegebenen Druck in Richtung der Unterlageplatte gegen das Endlosband gepresst werden.

Eine sehr genaue Bearbeitung des Endlosbandes lässt sich dadurch erzielen, dass während des Schleifens die Lage von Schleifflächen des Schleifkopfes, die mit dem Endlosband in Berührung stehen, parallel zu einer Auflagefläche der Unterlageplatte für das Endlosband gehalten wird.

### GEAENDERTES BLATT

Hierbei kann es vorgesehen sein, dass der Schleifkopf an zumindest einem mit einem Fluid gefüllten Druckbalg angeordnet ist, wobei durch den Druckbalg die Lage der Schleifflächen parallel zu der Auflagefläche gehalten wird.

Ein optimaler Verlauf der Steigung der Dickenabweichung lässt sich dadurch erzielen, dass ausgehend von der Stelle, an welcher das Endlosband eine geringere Dicke aufweist, in Umfangsrichtung des Endlosbandes und/oder in Richtung der Seitenkanten betrachtet, ein Druck mit dem die Schleifsteine gegen das Endlosband gepresst und/oder eine Rotationsgeschwindigkeit des Schleifkopfes und/ oder die Zeit, mit welcher der Schleifkopf an einer Stelle des Endlosbandes anliegt, verringert wird.

Gemäß einer vorteilhaften Variante der Erfindung kann es vorgesehen sein, dass die Stelle geringerer Dicke durch Bearbeiten, insbesondere Abschleifen, zumindest einer Schweißnaht des Endlosbandes, insbesondere einer zwei Enden des Bandkörpers miteinander zu einem geschlossenen Ring verbindenden Schweißnaht, hergestellt wird.

Als besonders günstig, um eine exakte Bearbeitung des Endlosbandes zu ermöglichen, hat es sich herausgestellt, dass eine Bearbeitung des Endlosbandes in einem zwischen zumindest zwei Umlenkelementen, insbesondere Umlenkrollen, aufgespannten Zustand erfolgt, wobei das Endlosband während der Bearbeitung unter Zugspannung gehalten wird.

Zudem kann das Endlosband relativ zu dem Schleifkopf bewegt werden.

Weiters hat es sich besonders bewährt, wenn in dem Bereich um die zumindest eine Stelle geringerer Dicke sowohl an der Bandinnenseite als auch an der Bandaußenseite Material abgetragen wird. Gemäß dieser Variante der Erfindung lässt sich unter anderem eine besonders geringe Planheitsabweichung des Endlosbandes erreichen.

Die oben genannte Aufgabe lässt sich auch mit einem Endlosband der eingangs genannten Art erfindungsgemäß dadurch lösen, dass es nach einem Verfahren gemäß den Ansprüchen 1 bis 9 bearbeitet ist und eine Steigung der Dickenabweichung in Längs- und/oder Querrichtung des Endlosbandes kleiner oder gleich 1:1000, insbesondere kleiner oder gleich 1:4000 oder 1:5000, und/oder eine Steigung einer Planheitsabweichung in Längs- und/oder Querrichtung des Endlosbandes kleiner oder gleich 1:500, insbesondere kleiner oder gleich 1:1000, ist.

Zum besseren Verständnis der Erfindung wird diese anhand der nachfolgenden Figuren näher erläutert.

Es zeigen jeweils in stark vereinfachter, schematischer Darstellung:
- Fig. 1: einen Abschnitt eines erfindungsgemäßen Endlosbandes;
- Fig. 2: ein Diagramm der Dickenabweichung des Endlosbandes aus Fig. 1;
- Fig. 3: einen Abschnitt eines erfindungsgemäßen Endlosbandes;
- Fig. 4: ein Diagramm einer Planheitsabweichung des Endlosbandes aus Fig. 3;
- Fig. 5: einen Abschnitt eines Endlosbandes mit einem auf einer Bandaußenseite des Endlosbandes angeordneten Schleifkopf;
- Fig. 6: den Abschnitt des Endlosbandes aus Fig. 5 mit einem auf der Bandinnenseite angeordneten Schleifkopf;
- Fig. 7: einen Abschnitt eines erfindungsgemäßen Endlosbandes mit einer Querschweißnaht;
- Fig. 8: den Abschnitt aus Fig. 7 nach einem Bearbeiten der Querschweißnaht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

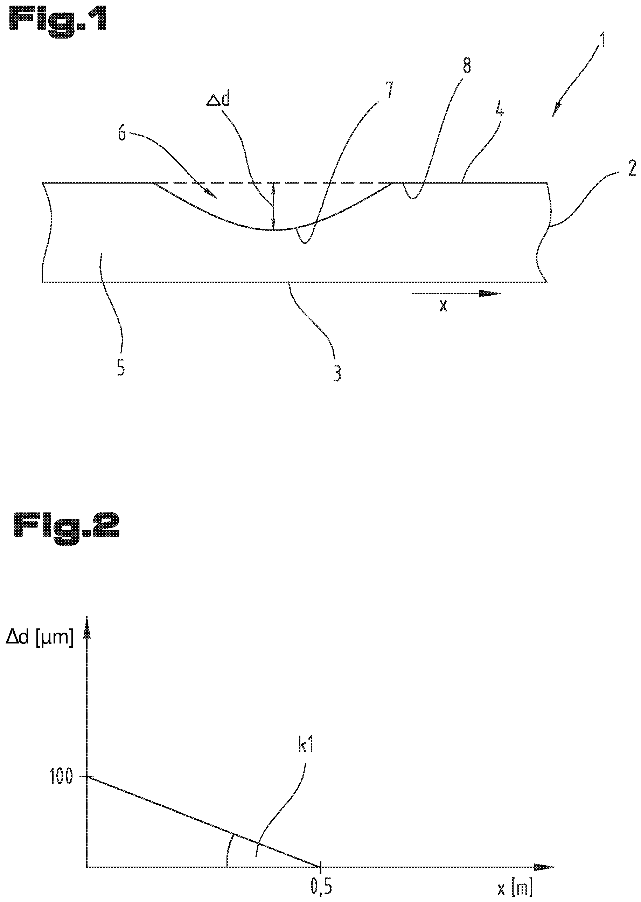

Gemäß Fig. 1 weist ein erfindungsgemäßes Endlosband 1 einen Bandkörper 2 aus Metall auf. Eine Bandinnenseite 3 und eine Bandaußenseite 4 des Endlosbandes 1 sind über Seitenkanten 5 miteinander verbunden.

Erfindungsgemäß wird in einem Bereich 6 um eine Stelle 7, an welcher das Endlosband 1 eine geringere Dicke aufweist als in einem anderen Bereich 8 des Endlosbandes 1, Material abgetragen. In Fig. 2 liegt die Stelle 7 in dem Koordinatenursprung. Die Dickenabweichung Δd ist in der Darstellung somit im Koordinatenursprung am größten. In dem dargestellten Beispiel beträgt die Dickenabweichung im Koordinatenursprung 100 µm. Somit ist das Endlosband an der Stelle 7 um 100 µm dünner als an der Stelle 8.

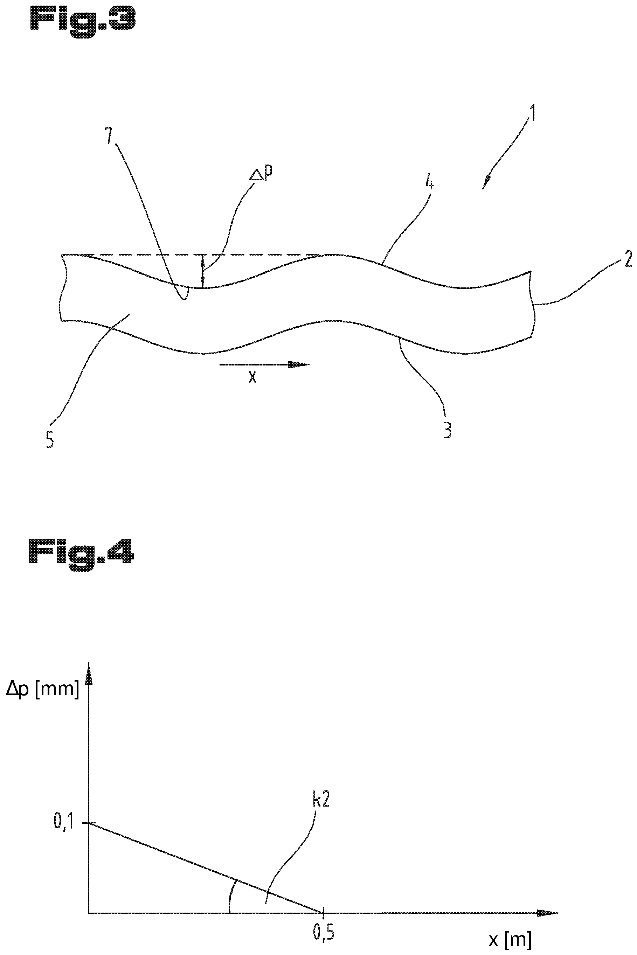

Wie aus Fig. 2 erkennbar ist erfolgt das Abtragen des Materials in dem Bereich 6 so, dass ein Betrag einer Steigung k1 einer Dickenabweichung Δd in Längsrichtung x und/oder Querrichtung des Endlosbandes jeweils kleiner oder gleich 1:1000, insbesondere kleiner oder gleich 1:4000 oder 1:5000 ist. In der dargestellten Ausführungsform geht die Dickenabweichung Δd ausgehend von der Stelle 7 bei ca. 0,5 m in einen annähernd konstanten Bereich über. Die Dickenabweichung Δd beträgt in der dargestellten Ausführungsform in etwa 100 µm auf 0,5 m. Wie aus Fig. 3 ersichtlich ist, kann das Endlosband 1 auch eine Planheitsabweichung Δp aufweisen, welche von Spannungen in dem Endlosband 1 hervorgerufen sein können.

Um die Planheitsabweichung Δp zu beseitigen kann das Endlosband 1 in dem Bereich 6, in welchem das Material abgetragen wird, gleichzeitig mit dem Abtragen des Materials, gerichtet werden. Durch diese Bearbeitung des Endlosbandes 1 können in diesem vorhandene Spannungen abgebaut werden.

Wie aus Fig. 4 ersichtlich ist, erfolgt das Richten so, dass ein Betrag einer Steigung k2 der Planheitsabweichung Δp des Endlosbandes 1 in Längsrichtung x und/oder Querrichtung des Endlosbandes kleiner oder gleich 1:500, insbesondere kleiner oder gleich 1:1000, ist. Auch in Fig. 4 ist die Stelle 7, an welcher die Planheitsabweichung Δp am größten ist, wieder in den Koordinatenursprung verschoben. In Fig. 4 beträgt die maximale Planheitsabweichung Δp 0,1mm. Die Planheitsabweichung Δp beträgt in der dargestellten Ausführungsform in etwa 0,1 mm auf 500 mm.

Das mit dem erfindungsgemäßen Verfahren bearbeitete Endlosband 1 weist somit eine Steigung k1 der Dickenabweichung in Längs- und/oder Querrichtung des Endlosbandes 1 kleiner oder gleich 1:1000, insbesondere kleiner oder gleich 1:4000 oder 1:5000, und eine Steigung k2 einer Planheitsabweichung Δp in Längs- und/oder Querrichtung des Endlosbandes kleiner oder gleich 1:500, insbesondere kleiner oder gleich 1: 1000, auf.

Um sowohl die gewünschte Steigung k1 der Dickenabweichung Δd als auch die gewünschte Steigung k2 der Planheitsabweichung Δp zu erzielen, kann das Abtragen des Materials mittels Schleifen erfolgen.

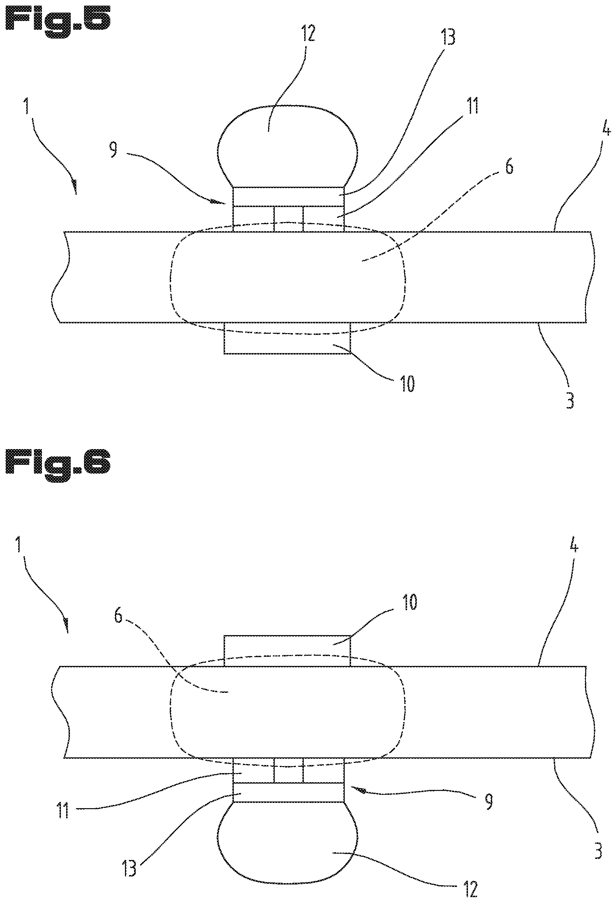

Hierbei kann der Bereich 6 des Endlosbandes 1, in welchem das Material abgetragen wird, zwischen einem rotierenden Schleifkopf 9 und einer Unterlageplatte 10 angeordnet sein. Der Schleifkopf 9 und die Unterlageplatte 10 liegen an einander gegenüberliegenden Seiten des Endlosbandes 1 an diesem an. Gemäß Fig. 5 liegt der Schleifkopf 9 in dem Bereich 6 an der Bandaußenseite 4 an während die Unterlageplatte 10 an der Bandinnenseite 3 anliegt. In Fig. 6 ist die Situation genau umgekehrt. Es hat sich auch herausgestellt, dass besonders gute Ergebnisse hinsichtlich der gewünschten Planheitsabweichung Δp und der Dickenabweichung Δd erzielt werden können, wenn die Bearbeitung des Endlosbandes 1 sowohl an der Bandinnenseite 3 als auch an der Bandaußenseite 4 durchgeführt wird. Insbesondere kann in dem Bereich 6 sowohl an der Bandinnenseite 3 als auch an der Bandaußenseite 4 Material abgetragen werden. Somit erfolgt das Schleifen des Endlosbandes 1 in dem Bereich 6 bevorzugterweise sowohl an der Bandinnenseite 3 als auch an der Bandaußenseite 4.

Der Schleifkopf 9 kann mehrere Schleifsteine 11 aufweisen, die mit einem vorgegebenen Druck in Richtung der Unterlageplatte 10 gegen das Endlosband 1 gepresst werden, wobei der Schleifkopf 9 während des Abtragens des Materials eine rotierende Bewegung ausführt. Die Schleifsteine 11 können an einem Drehteller 13 befestigt sein. Das Abschleifen bzw. Bearbeiten des Endlosbandes erfolgt hierbei in einem relativ großen Bereich. So beträgt in dem in Fig. 2 dargestellten Ausführungsbeispiel die Bearbeitungslänge in Längsrichtung x des Endlosbandes 1 ausgehend von der Stelle 7 jeweils 0,5 m in beide Richtungen. Um eine exakte Bearbeitung zu gewährleisten, kann während des Schleifens die Lage von Schleifflächen des Schleifkopfes 9 bzw. der Schleifsteine 11, die mit dem Endlosband 1 in Berührung stehen, parallel zu einer Auflagefläche der Unterlageplatte 10 gehalten werden. Der Schleifkopf 9 kann beispielsweise an einem mit einem Fluid gefüllten Druckbalg 12 angeordnet ist, wobei durch den Druckbalg 12 die Lage der Schleifflächen parallel zu der Auflagefläche gehalten wird. Der Druckbalg 12 kann beispielsweise mit dem Drehteller 13 verbunden sein und sich mit dem Rotationstelle 13 mitdrehen und zwischen dem Drehteller 13 und einem sich ebenfalls gleichsinnig mit dem Drehteller mitdrehenden Widerlager angeordnet sein. Auch kann der Druckbalg torusförmig ausgebildet sein und beispielsweise rotationssymmetrisch um eine mit dem Drehteller 13 verbundene Antriebsachse angeordnet sein.

Ausgehend von der Stelle 7, an welcher das Endlosband eine geringere Dicke aufweist, kann in Umfangsrichtung bzw. Längsrichtung x des Endlosbandes 1 und/oder in Richtung der Seitenkanten betrachtet, ein Druck mit dem die Schleifsteine 11 gegen das Endlosband 1 gepresst und/oder eine Rotationsgeschwindigkeit des Schleifkopfes 9 und/ oder die Zeit, mit welcher der Schleifkopf 9 an einer Stelle des Endlosbandes anliegt 1, verringert werden. Auf diese Weise kann in von der Stelle 7 entfernteren Bereichen immer weniger Material abgetragen werden, sodass sich die gewünschte Steigung k1 der Dickenabweichung Δd bzw. die gewünschte Steigung k2 der Planheitsabweichung Δp ergibt. Das erfindungsgemäße Verfahren kann iterativ durchgeführt werden, so kann nach einem ersten Schleifvorgang in dem Bereich 6 gemessen werden, wie viel Material abgetragen worden ist und wieviel noch abzutragen ist um die gewünschte Dickenabweichung Δd zu erzielen. Es ist auch möglich, die Bearbeitung zu automatisieren, indem ausgehend von der Tiefe der Stelle 7 bzw. der Dickenabweichung Δd an dieser Stelle, gespeicherte Profile für das Abtragen des Materials verwendet werden.

Die Bearbeitung des Endlosbandes 1 erfolgt bevorzugt in einem zwischen zwei hier nicht dargestellten Umlenkrollen aufgespannten Zustand, wobei das Endlosband während der Bearbeitung unter Zugspannung gehalten wird. Zudem kann das Endlosband 1 während der Bearbeitung auch relativ zu dem Schleifkopf 9 in einer Umlaufrichtung des Endlosbandes 1 bewegt werden.

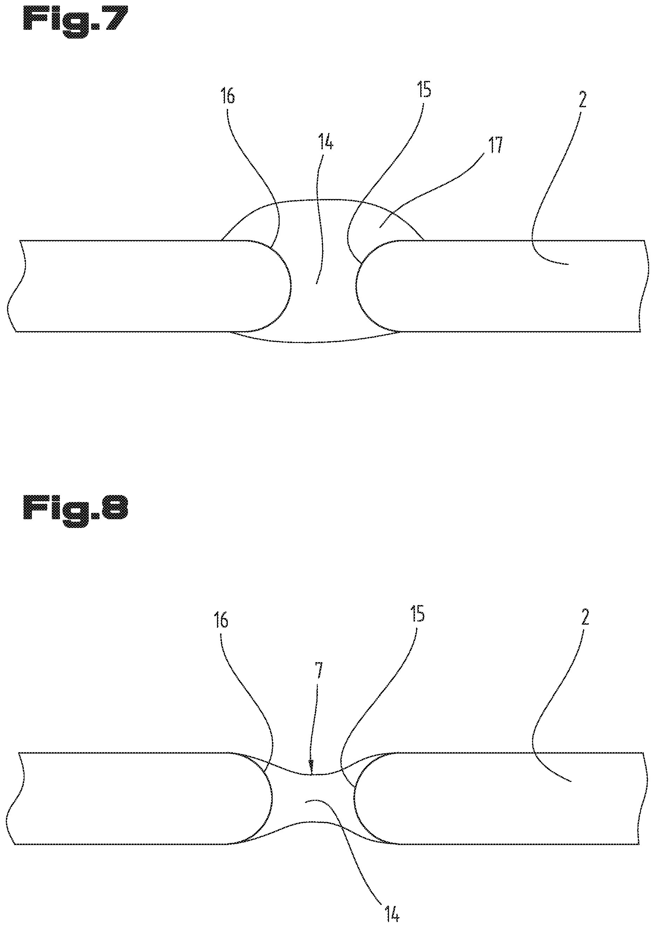

Wie in den Figuren 7 und 8 dargestellt, kann die Stelle 7 geringerer Dicke durch Bearbeiten, insbesondere Abschleifen, zumindest einer Schweißnaht 14 des Endlosbandes 1, insbesondere einer zwei Enden 15, 16 des Bandkörpers 2 miteinander zu einem geschlossenen Ring verbindenden Schweißnaht 14, hergestellt werden. Eine Schweißraupe 17 der Scheißnaht 14 kann in einem ersten Schritt abgeschliffen und hernach Verunreinigungen abgetragen werden. Hierdurch entsteht aus der in Fig. 7 dargestellten Schweißnaht 14 die in Fig. 8 dargestellte. Diese in Fig. 8 dargestellte Schweißnaht 14 stellt die Stelle 7 geringerer Dicke dar und kann dann in weiterer Folge wie oben beschrieben bearbeitet werden.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

### Bezugszeichenaufstellung

- 1: Endlosband
- 2: Bandkörper
- 3: Bandinnenseite
- 4: Bandaußenseite
- 5: Seitenkante
- 6: Bereich
- 7: Stelle
- 8: Bereich
- 9: Schleifkopf
- 10: Unterlageplatte
- 11: Schleifstein
- 12: Druckbalg
- 13: Drehteller
- 14: Schweißnaht
- 15: Ende
- 16: Ende

## Patentansprüche

1. Verfahren zur Bearbeitung eines Endlosbandes (1) mit einem Bandkörper (2) aus Metall, wobei das Endlosband (1) eine Bandinnenseite (3) und eine Bandaußenseite (4) sowie die Bandinnenseite (3) und die Bandaußenseite (4) verbindende Seitenkanten (5) aufweist, in einem Bereich (6) um eine Stelle (7), an welcher das Endlosband (1) eine geringere Dicke aufweist als in einem anderen Bereich (8) des Endlosbandes (1), Material abgetragen wird, sodass ein Betrag einer Steigung (k1) einer Dickenabweichung (Δd) in Längsrichtung (x) und/oder Querrichtung des Endlosbandes (1) jeweils kleiner oder gleich 1:1000, insbesondere kleiner oder gleich 1:4000 oder 1:5000 ist, wobei das Abtragen des Materials mittels Schleifen erfolgt, **dadurch gekennzeichnet, dass**,
gleichzeitig mit einem Abtragen des Materials das Endlosband (1) in dem Bereich (6), in welchem das Material abgetragen wird, gerichtet wird, sodass ein Betrag einer Steigung (k2) einer Planheitsabweichung (Δp) des Endlosbandes in Längsrichtung (x) und/oder Querrichtung des Endlosbandes (1) kleiner oder gleich 1:500, insbesondere kleiner oder gleich 1:1000, ist,
wobei der Bereich (6) des Endlosbandes (1), in welchem das Material abgetragen wird, zwischen einem rotierenden Schleifkopf (9) und einer Unterlageplatte (10) angeordnet ist.

2. Verfahren nach Anspruch 1, **dadurch gekennzeichnet, dass** der Schleifkopf (9) mehrere Schleifsteine (11) aufweist, die mit einem vorgegebenen Druck in Richtung der Unterlageplatte (10) gegen das Endlosband (1) gepresst werden.

3. Verfahren nach Anspruch 2, **dadurch gekennzeichnet, dass** während des Schleifens die Lage von Schleifflächen des Schleifkopfes (9), die mit dem Endlosband (1) in Berührung stehen, parallel zu einer Auflagefläche der Unterlageplatte (10) für das Endlosband (1) gehalten wird.

4. Verfahren nach Anspruch 3, **dadurch gekennzeichnet, dass** der Schleifkopf (9) an zumindest einem mit einem Fluid gefüllten Druckbalg (12) angeordnet ist, wobei durch den Druckbalg (12) die Lage der Schleifflächen parallel zu der Auflagefläche gehalten wird.

5. Verfahren nach einem der Ansprüche 2 bis 4, **dadurch gekennzeichnet, dass** ausgehend von der Stelle (7), an welcher das Endlosband (1) eine geringere Dicke aufweist, in Umfangsrichtung des Endlosbandes (1) und/oder in Richtung der Seitenkanten (2) betrachtet, ein Druck mit dem die Schleifsteine (11) gegen das Endlosband (1) gepresst und/oder eine Rotationsgeschwindigkeit des Schleifkopfes (9) und/ oder die Zeit, mit welcher der Schleifkopf (9) an einer Stelle des Endlosbandes (1) anliegt, verringert wird.

6. Verfahren nach einem der Ansprüche 1 bis 5, **dadurch gekennzeichnet, dass** die Stelle (7) geringerer Dicke durch Bearbeiten, insbesondere Abschleifen, zumindest einer Schweißnaht (14) des Endlosbandes (1), insbesondere einer zwei Enden (15, 16) des Bandkörpers (2) miteinander zu einem geschlossenen Ring verbindenden Schweißnaht (14), hergestellt wird.

7. Verfahren nach einem der Ansprüche 1 bis 6, **dadurch gekennzeichnet, dass** eine Bearbeitung des Endlosbandes (1) in einem zwischen zumindest zwei Umlenkelementen, insbesondere Umlenkrollen, aufgespannten Zustand erfolgt, wobei das Endlosband (1) während der Bearbeitung unter Zugspannung gehalten wird.

8. Verfahren nach einem der Ansprüche 1 bis 7, **dadurch gekennzeichnet, dass** das Endlosband (1) relativ zu dem Schleifkopf (9) bewegt wird.

9. Verfahren nach einem der Ansprüche 1 bis 8, **dadurch gekennzeichnet, dass** in dem Bereich um die zumindest eine Stelle (7) geringerer Dicke sowohl an der Bandinnenseite (3) als auch an der Bandaußenseite (4) Material abgetragen wird.

## Claims

1. A method for processing an endless belt (1) having a belt body (2) made of metal,
wherein the endless belt (1) comprises a belt inside (3) and a belt outside (4) as well as lateral edges (5) connecting the belt inside (3) and the belt outside (4), in a region (6) around a point (7), at which the endless belt (1) has a smaller thickness than in another region (8) of the endless belt (1), material is removed, such that an amount of a gradient (k1) of a thickness deviation (Δd) in the longitudinal direction (x) and/or transverse direction of the endless belt (1) is in each case less than or equal to 1: 1000, in particular less than or equal to 1:4000 or 1:5000, wherein the removal of the material is carried out by means of grinding, **characterized in that**,
simultaneously with a removal of the material, the endless belt (1) is straightened in the region (6) in which the material is removed, such that an amount of a slope (k2) of a flatness deviation (Δp) of the endless belt in the longitudinal direction (x) and/or transverse direction of the endless belt (1) is smaller than or equal to 1:500, in particular smaller than or equal to 1:1000,
wherein the region (6) of the endless belt (1) in which the material is removed is arranged between a rotating grinding head (9) and a base plate (10).

2. The method according to claim 1, **characterized in that** the grinding head (9) comprises multiple grinding stones (11), which are pressed against the endless belt (1) in the direction of the base plate (10) with a predefined pressure.

3. The method according to claim 2, **characterized in that** during grinding, the position of grinding surfaces of the grinding head (9), which are in contact with the endless belt (1), is kept parallel to a contact surface of the base plate (10) for the endless belt (1).

4. The method according to claim 3, **characterized in that** the grinding head (9) is arranged on at least one pressure bellows (12) filled with a fluid, wherein the position of the grinding surfaces is kept parallel to the contact surface by the pressure bellows (12).

5. The method according to one of claims 2 to 4, **characterized in that**, starting from the point (7) at which the endless belt (1) has a smaller thickness, as seen in the circumferential direction of the endless belt (1) and/or in the direction of the lateral edges (2), a pressure with which the grinding stones (11) are pressed against the endless belt (1) and/or a rotational speed of the grinding head (9) and/or the time for which the grinding head (9) bears against a point of the endless belt (1) is reduced.

6. The method according to one of claims 1 to 5, **characterized in that** the point (7) of smaller thickness is produced by processing, in particular grinding off, at least one weld seam (14) of the endless belt (1), in particular a weld seam (14) connecting two ends (15, 16) of the belt body (2) to one another to form a closed ring.

7. The method according to one of claims 1 to 6, **characterized in that** processing of the endless belt (1) is carried out in a spanned state between at least two deflection elements, in particular deflection rollers, wherein the endless belt (1) is held under tensile stress during the processing.

8. The method according to one of claims 1 to 7, **characterized in that** the endless belt (1) is moved relative to the grinding head (9).

9. The method according to one of the claims 1 to 8, **characterized in that** in the region around the at least one point (7) of smaller thickness, material is removed both on the belt inside (3) and on belt outside (4).

## Revendications

1. Procédé d'usinage d'une bande sans fin (1) avec un corps de bande (2) en métal, la bande sans fin (1) comportant un côté intérieur de bande (3) et un côté extérieur de bande (4) ainsi que des arêtes latérales (5) raccordant le côté intérieur de bande (3) et le côté extérieur de bande (4), du matériau étant enlevé dans une zone (6) autour d'un emplacement (7) au niveau duquel la bande sans fin (1) présente une épaisseur plus faible que dans une autre zone (8) de la bande sans fin (1) de sorte qu'une valeur d'une pente (k1) d'un écart d'épaisseur (Δd) dans la direction longitudinale (x) et/ou la direction transversale de la bande sans fin (1) est respectivement inférieure ou égale à 1:1000, en particulier inférieure ou égale à 1:4000 ou 1:5000, l'enlèvement du matériau s'effectuant au moyen de meules, **caractérisé en ce que**,
en même temps qu'un enlèvement du matériau, la bande sans fin (1) est dressée dans la zone (6) dans laquelle le matériau est enlevé, de sorte qu'une valeur d'une pente (k2) d'un écart de planéité (Δp) de la bande sans fin dans la direction longitudinale (x) et/ou la direction transversale de la bande sans fin (1) est inférieure ou égale à 1:500, en particulier inférieure ou égale à 1:1000,
la zone (6) de la bande sans fin (1) dans laquelle le matériau est enlevé étant disposée entre une tête de meulage (9) rotative et une plaque de support (10).

2. Procédé selon la revendication 1, **caractérisé en ce que** la tête de meulage (9) comporte plusieurs meules (11) qui sont pressées avec une pression prédéfinie en direction de la plaque de support (10) contre la bande sans fin (1).

3. Procédé selon la revendication 2, **caractérisé en ce que**, pendant le meulage, la position de surfaces de meulage de la tête de meulage (9) qui sont en contact avec la bande sans fin (1) est maintenue parallèlement à une surface d'appui de la plaque de support (10) pour la bande sans fin (1).

4. Procédé selon la revendication 3, **caractérisé en ce que** la tête de meulage (9) est disposée sur au moins un soufflet de pression (12) rempli de fluide, la position des surfaces de meulage étant maintenue par le soufflet de pression (12) parallèlement à la surface d'appui.

5. Procédé selon l'une des revendications 2 à 4, **caractérisé en ce que**, en partant de l'emplacement (7) au niveau duquel la bande sans fin (1) présente une épaisseur plus faible, vu dans la direction circonférentielle de la bande sans fin (1) et/ou en direction des arêtes latérales (2), une pression avec laquelle les meules (11) sont pressées contre la bande sans fin (1) et/ou une vitesse de rotation de la tête de meulage (9) et/ou le temps pendant lequel la tête de meulage (9) est adjacent à un emplacement de la bande sans fin (1) est réduit(e).

6. Procédé selon l'une des revendications 1 à 5, **caractérisé en ce que** l'emplacement (7) de moindre épaisseur est produit par l'usinage, en particulier le meulage, d'au moins un cordon de soudure (14) de la bande sans fin (1), en particulier d'un cordon de soudure (14) raccordant l'une à l'autre deux extrémités (15, 16) du corps de bande (2) pour former un anneau fermé.

7. Procédé selon l'une des revendications 1 à 6, **caractérisé en ce qu'**un usinage de la bande sans fin (1) s'effectue dans un état tendu entre au moins deux éléments de renvoi, en particulier rouleaux de renvoi, la bande sans fin (1) étant maintenue dans un état de contrainte de traction pendant l'usinage.

8. Procédé selon l'une des revendications 1 à 7, **caractérisé en ce que** la bande sans fin (1) est déplacée par rapport à la tête de meulage (9).

9. Procédé selon l'une des revendications 1 à 8, **caractérisé en ce que**, dans la zone autour de l'au moins un emplacement (7) de moindre épaisseur, du matériau est enlevé aussi bien sur le côté intérieur de bande (3) que sur le côté extérieur de bande (4).
